# EUROPÄISCHE PATENTSCHRIFT

(11) **EP 3 987 441 B1**
(45) Veröffentlichungstag und Bekanntmachung des Hinweises auf die Patenterteilung: **26.04.2023**
(21) Anmeldenummer: 20728793.9
(22) Anmeldetag: 03.06.2020
(51) Int. Cl.: G06K 19/077, B60J 1/00, H01Q 1/12, H01Q 1/22, H01Q 19/28

(54) **BEHEIZBARE FAHRZEUGSCHEIBE MIT EINEM TRANSPONDER**
HEATABLE VEHICLE PANE WITH A TRANSPONDER
VITRE DE VÉHICULE CHAUFFABLE DOTÉE D'UN TRANSPONDEUR

(30) Priorität: 24.06.2019 EP 19181981
(43) Veröffentlichungstag der Anmeldung: 27.04.2022
(73) Patentinhaber: Saint-Gobain Glass France, 92400 Courbevoie (FR)
(72) Erfinder: HOLTSTIEGE, Thomas, 58332 Schwelm (DE); SCHMITZ, Tim, 52072 Aachen (DE); BERTEL, David, 52066 Aachen (DE)
(74) Vertreter: Weber, Sophie
(86) Internationale Anmeldenummer: PCT/EP2020/065304
(87) Internationale Veröffentlichungsnummer: WO 2020/259971

(56) Entgegenhaltungen:
- DE-A1- 4 323 239
- DE-C2- 4 323 239
- JP-A- H04 326 203
- JP-A- 2002 359 565
- SINGH D ET AL: "Frequency doubling active transponder in car windscreen", ELECTRONICS LETTERS, IEE STEVENAGE, GB, Bd. 33, Nr. 21, 9. Oktober 1997 (1997-10-09), Seiten 1799-1800, XP006008059, ISSN: 0013-5194, DOI: 10.1049/EL:19971210

## Beschreibung

Die Erfindung betrifft eine Fahrzeugscheibe mit einem Transponder, ein Verfahren zu deren Herstellung und die Verwendung der Fahrzeugscheibe in Fortbewegungsmitteln.

Transponder, die sich auf Objekten befinden, z.B. Waren und Gütern, und die durch Auslesegeräte mit Sende- und Empfangseinheiten ausgelesen werden, sind allgemein bekannt. Ein solcher Transponder wird zur Identifikation von diesen Objekten verwendet und ist üblicherweise ein Teil eines Identifikationssystems. Derartige Systeme zur Identifikation bestehen unter anderem aus einem stationären Lesegerät und einem mobilen Transponder, der an dem zu identifizierenden Objekt angebracht ist. Heutzutage ist der mobile Transponder ein RFID (Radio Frequency IDentification)-Transponder, der aus einem RFID-Chip und einer separaten Antenne besteht.

Die Zuverlässigkeit beim Auslesen eines Identifikationssignals ist von hoher Bedeutung, so beispielsweise beim Straßenverkehr. Die Kommunikation zwischen Lesegerät und mobilem Transponder mit den bekannten funktechnischen Problemen der unerwünschten Reflexion, Absorption und Abschirmung führt oft zu ungenügenden Leseergebnissen und Schreibergebnissen in der Kommunikation mit dem jeweiligen Transponder. Die bekannten Auslesesysteme, die häufig die Form eines Tores (Gates) haben, durch das ein zu registrierendes und mit einem RFID-Transponder ausgestattetes Fahrzeug hindurch fährt, haben den Nachteil, dass das Identifikationssignal aufgrund der geringen Signalstärke manchmal nicht erfasst werden kann.

DE 10 2016 013 938 A1 beschreibt eine Fahrzeugvorrichtung mit einer elektronischen Identifikations- und/oder Bezahleinheit mit einer RFID-Einheit. Die RFID-Einheit umfasst ein Leseelement und ein Ausgabeelement. Das Leseelement ist in einem Fahrzeuginnenraum angeordnet und erfasst die Identifikations- und/oder Bezahlinformation eines RFID-Chips. Die erfassten Identifikations- und/oder Bezahlinformationen werden dupliziert und in das Ausgabeelement kopiert. Das Ausgabeelement ist an einer Fahrzeugaußenseite angeordnet und leitet die Identifikations-und/oder Bezahlinformation an ein externes Lesegerät kontaktlos weiter. Abgesehen von dem benötigten hohen Aufwand an elektronischen Komponenten muss das Ausleseelement außen am Fahrzeug verbaut werden und ist nicht gegenüber der Umwelt abgeschirmt, so dass es zu unerwünschten Wechselwirkungen mit der Umwelt kommen kann.

JP 2002 359565 offenbart ein Fahrzeug mit einer Navigation, welche über ein an der Decke angeordnetes Relais mit einem Mobilfunkterminal außerhalb des Fahrzeugs eine Verbindung aufbauen kann.

JP H04326203 offenbart eine Windschutzscheibe mit einer Patch-Antenne.

DE 43 23 239 A1 beschreibt eine Antennenstruktur für eine Kraftfahrzeug-Heckscheibe mit symmetrisch zur Scheibenmitte angeordneten Leitungsabschnitten.

Der Erfindung liegt daher die Aufgabe zu Grunde, eine Fahrzeugscheibe mit einem Transponder bereitzustellen, die eine erhöhte Kommunikationsqualität aufweist.

Die Aufgabe konnte daher durch eine Fahrzeugscheibe gemäß Anspruch 1 und ein Fahrzeug gemäß Anspruch 13 gelöst werden. Bevorzugte Ausgestaltungen der Erfindung sind in den abhängigen Ansprüchen wiedergegeben.

Die Erfindung betrifft eine Fahrzeugscheibe, die eine erste Glasscheibe, eine elektrisch leitfähige Funktionskomponente, mindestens zwei Stromsammelleiter und einen Transponder umfasst. Die Stromsammelleiter werden auch als sogenannte Busbar bezeichnet. Die elektrisch leitfähige Funktionskomponente ist mit den Stromsammelleitern derart elektrisch leitend verbunden, dass bei Anlegen einer elektrischen Spannung an die Stromsammelleiter ein Strom durch die elektrisch leitfähige Funktionskomponente fließen kann. Der Transponder verfügt über zumindest eine Antenne und eine Steuereinheit zur Kommunikation mit einem Lesegerät, wobei die Steuereinheit einen Speicher zum Speichern von Identifikationsdaten umfasst. Die Steuereinheit ist vorzugsweise ein Halbleiter-Chip, der den Speicher zum Speichern von Identifikationsdaten aufweist. Die Steuereinheit ist dazu vorgesehen, die Antenne anzusteuern und ein durch die Antenne empfangenes oder gesendetes Signal zu verarbeiten.

Sowohl die Steuereinheit mit dem Speicher als auch die Antenne können auf einem Substrat angeordnet sein. Das Substrat kann ein dielektrisches Material aufweisen, das über eine außenseitige Oberfläche des Substrats mit einer Oberfläche der Glasscheibe verbunden ist, bevorzugt durch Kleben. Die Fahrzeugscheibe weist zumindest einen dem Transponder zugeordneten Reflektor auf, der zum Transponder beabstandet und zum Erhöhen eines Antennengewinns der Antenne vorgesehen ist.

Erfindungsgemäß ist der Reflektor zumindest teilweise durch einen der zwei Stromsammelleiter ausgebildet. Des Weiteren ist vorgesehen, dass der Transponder und der Reflektor innerhalb der Fahrzeugscheibe angeordnet sein können. Die konkrete Position an oder in der Fahrzeugscheibe ergibt sich aus dem Begriff "zugeordneter Reflektor" dahingehend, dass er natürlich der jeweiligen Antennenposition zugeordnet sein und zur Erzielung einer verstärkenden Wirkung ausreichend dimensioniert sein muss.

Um den Antennengewinn eines Transponders auf einer Fahrzeugscheibe zu erhöhen, wird die Abstrahlung gebündelt. Über den Reflektor kann die Abstrahlung der Antenne derart gebündelt werden, dass sich ein höherer Antennengewinn ergibt. Die so erreichte Verstärkung eines vom Transponder gesendeten und empfangenen Signals kann insbesondere aus einer senkrechten Richtung zur Oberfläche der Fahrzeugscheibe besonders gut gemessen werden. Durch den höheren Antennengewinn wird die Reichweite und Empfindlichkeit des Transponders vergrößert, so dass der Transponder durch ein entsprechendes externes Lesegerät aus einer weiteren Entfernung erfasst werden kann.

Die Glasscheibe enthält bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die Glasscheibe ist bevorzugt transparent, insbesondere für die Verwendung in einem Fahrzeug, beispielsweise als Windschutzscheibe oder Rückscheibe, oder anderen Verwendungen, bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Fahrzeugscheiben, die nicht im verkehrsrelevanten Sichtfeld des Fahrers liegen, beispielsweise für Dachscheiben, kann die Transmission aber auch viel geringer sein, beispielsweise größer als oder gleich 5 %.

Die erfindungsgemäße Fahrzeugscheibe ist zur Abtrennung eines Fahrzeuginnenraums von einer äußeren Umgebung geeignet. In der äußeren Umgebung (kurz Außenraum) befindet sich das Lesegerät des Transponders, das Signale des Transponders empfangen kann.

Die Fahrzeugscheibe kann eine beliebige dreidimensionale Form aufweisen. Bevorzugt ist die Glasscheibe plan oder leicht oder stark in einer Richtung oder in mehreren Richtungen des Raumes gebogen. Die Scheiben können farblos oder gefärbt sein.

Die Dicke der Glasscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas verwendet. Die Größe der Glasscheibe kann breit variieren und richtet sich nach der Größe der erfindungsgemäßen Verwendung. Die Glasscheibe weist beispielsweise im Fahrzeugbau übliche Flächen von 200 cm² bis zu 3 m² auf.

Vorteilhafterweise kann die Fahrzeugscheibe zum Ende des Herstellungsverfahrens oder erst am späteren Verwendungsort dadurch vervollständigt werden, dass der Transponder an der dafür vorgesehenen Stelle befestigt wird. Dabei kann das Substrat sehr dünn und transparent ausgebildet sein, so dass der an der Fahrzeugscheibe befindliche Transponder wenig auffällt. Das Substrat kann plattförmig ausgebildet sein und eine konstante Materialstärke (Dicke) aufweisen.

Gemäß einer weiteren vorteilhaften Weiterbildung der Erfindung ist der Transponder ein RFID-Transponder. Insbesondere weisen UHF RFID-Transponder einen Halbleiter-Chip auf, der sich durch seine gegenüber der Antenne kleinen Abmessungen auszeichnet.

In einer weiteren Ausgestaltung der Erfindung arbeitet der Transponder in einem Frequenzbereich von 800 MHz bis 3GHz, bevorzugt bis 2,45 GHz, besonders bevorzugt von 860 MHz bis 930 MHz. Die Abmessungen der Antenne sind im Allgemeinen von dem gewünschten Frequenzband und der jeweiligen Verwendung abhängig.

Ferner wird vorgeschlagen, dass die Identifikationsdaten zur Kennzeichnung eines Fahrzeugs vorgesehen sind. Dadurch kann vorteilhaft eine Zuordnung eines Transponders zu einem Fahrzeug erzielt werden.

Nach einer weiteren vorteilhaften Weiterbildung der Erfindung arbeitet der Transponder energieautark.

Die erfindungsgemäße Fahrzeugscheibe umfasst bevorzugt ein Leitersystem mit Heizfunktion als elektrisch leitfähige Funktionskomponente. Das Leitersystem weist mehrere zwischen den zwei Stromsammelleitern angeordnete und als Heizleiter dienende Widerstandselemente auf.

Die Heizleiter bestehen aus vertikal, im wesentlich parallel zueinander verlaufenden Widerstandsdrähten, die einen Durchmesser von etwa 20 µm bis 200µm, bevorzugt 0.09 mm (90 µm), besonders bevorzugt 20 µm bis 30 µm aufweisen. Sie sind vorzugsweise in einem gegenseitigen Abstand von etwa 1 mm bis 5 mm wellenförmig verlegt und verlaufen im Wesentlichen senkrecht zur Antenne des Transponders. Grundsätzlich sind auch gerade Widerstandsdrähte als Heizleiter möglich. Es sind weitere Ausführungsformen des Heizfeldes denkbar, z.B. mit horizontal verlaufenden Heizdrähten und vertikalen Stromsammelleitern. Auch in solchen Fällen ist die Erfindung anwendbar, nur liegen die Aussparungen des Heizfeldes mit dem darum geführten Stromsammelleiter dann seitlich in der Scheibe.

Die Stromsammelleiter können jeweils als eine gedruckte, elektrisch leitfähige Paste, bevorzugt eine silberhaltige Siebdruckpaste oder als ein elektrisch leitfähiger Leiter, bevorzugt aus Metall und insbesondere aus Kupfer, Silber, Gold oder Aluminium ausgebildet sein. Kupfer hat sich für solche Leiter bewährt, da es eine gute elektrische Leitfähigkeit besitzt. Gleichzeitig sind die Materialkosten bei Kupfer niedrig.

Vorteilhafterweise weist die Fahrzeugscheibe zwei Stromsammelleiter auf. Ein erster Stromsammelleiter kann in der Nähe einer ersten Glasscheibenkante und ein zweiter Stromsammelleiter in der Nähe einer der ersten Glasscheibenkante gegenüberliegenden, zweiten Scheibenkante verlaufen.

Zumindest teilweise dient ein Stromsammelleiter als Reflektor zum Reflektieren von elektromagnetischen Wellen und ist zu diesem Zweck geeignet ausgebildet, d.h. er verfügt über eine zur Reflexion im gewünschten Frequenzbereich geeignete Länge und Abstand zur Transponderantenne. Der Stromsammelleiter kann auch beispielsweise in Drahtform oder als Flachleiter ausgebildet sein. Ein Linienleiter als Reflektor ist handhabungsstabil und stabil bei der Lagerung an der Fahrzeugscheibe befestigt.

Gemäß einer bevorzugten Weiterbildung der Erfindung weist der Reflektor zumindest zwei parallel verlaufende Abschnitte eines Stromsammelleiters auf, wobei die Abschnitte des Stromsammelleiters derart angeordnet sind, dass diese Abschnitte zur Reflexion eines zu übertragenen Signals der Antenne vorgesehen sind. Diese Weiterbildung beruht auf der Erkenntnis, dass viele Fahrzeugscheiben über zwei nahezu parallel verlaufende Stromsammelleiter verfügen. Das Leitersystem kann sich dabei zumindest über einen Teil einer Oberfläche der Glasscheibe erstrecken oder in einer dazu parallel verlaufenden Ebene der Fahrzeugscheibe integriert sein.

Der Transponder oder die Fläche der orthogonalen Projektion des Transponders bezüglich der Fahrzeugscheibe können mittig zwischen zwei parallel verlaufenden Abschnitten eines Stromsammelleiters angeordnet sein. Damit ist ein Transponder mit einer Reflektoranordnung möglich, die besonders einfach herstellbar ist.

In einer weiteren zweckmäßigen Weiterbildung der Erfindung kann der Reflektor als ein Viereck, Rechteck oder ein Trapez ausgebildet sein. Das Viereck, Rechteck oder Trapez kann eine Öffnung an einer Seite aufweisen. Die Breite der Öffnung kann bis zu einer Seitenlänge des Vierecks, Rechtecks oder Trapez betragen. Dies hat den Vorteil, dass man eine hohe Flexibilität bekommt bezüglich anderer Komponenten des Fahrzeugs wie Spiegel oder Kamera, die in unmittelbarer Nähe der Reflektorstruktur positioniert sein können.

Der Transponder oder die Fläche der orthogonalen Projektion des Transponders sind in einem für elektromagnetische Strahlung im Frequenzbereich der Antenne durchlässigen Bereich der Fahrzeugscheibe angeordnet. Mit anderen Worten überlappt der für elektromagnetische Strahlung im Frequenzbereich der Antenne durchlässige Bereich den Transponder in einer senkrechten Ausrichtung in Bezug auf die Glasscheibe. Der für elektromagnetische Strahlung durchlässige Bereich besteht, je nach verwendeter Frequenz, nur aus einem Umkreis von wenigen Zentimetern um den Transponder.

Der für elektromagnetische Strahlung im Frequenzbereich der Antenne durchlässige Bereich ist ein Bereich, in dem das Leitersystem nicht angeordnet ist.

Falls die Stromsammelleiter und der Transponder in einer Ebene der Fahrzeugscheibe angeordnet sind, z.B. ist der Transponder auf der Scheibenoberfläche angeordnet, auf der sich auch das Leitersystem mit den zwei Stromsammelleitern erstreckt, dann kann zumindest ein Abschnitt eines Stromsammelleiters den Transponder umschließen.

Gemäß einer weiteren vorteilhaften Weiterbildung der Erfindung umfasst zumindest ein Stromsammelleiter eine über den Bereich der Widerstandsdrähte hinaus sich erstreckende Verlängerung. Dabei weist die Verlängerungen einen Knick auf. Durch den Knick ist die Verlängerung in einer Richtung, vorzugsweise in vertikaler Richtung zum Stromsammelleiter, abgewinkelt. Somit verläuft die Verlängerung im Wesentlichen parallel zu den Seitenkanten der Fahrzeugscheibe. Der Stromsammelleiter kann jeweils an seinen beiden Enden eine Verlängerung aufweisen.

Der Transponder oder die Fläche der orthogonalen Projektion des Transponders können in dem von der Verlängerung teilweise oder vollständig umrandeten Bereich angeordnet sein. Der von der Verlängerung teilweise oder vollständig umrandete Bereich befindet sich außerhalb des Leitersystems mit Heizfunktion.

Gemäß einer weiteren vorteilhaften Weiterbildung der Erfindung weist die Fahrzeugscheibe eine erste Glasscheibe auf, die über eine thermoplastische Zwischenschicht mit einer zweiten Glasscheibe verbunden ist. Als Glasscheibe sind im Grunde alle elektrisch isolierenden Substrate geeignet, die unter den Bedingungen der Herstellung und der Verwendung der erfindungsgemäßen Fahrzeugscheibe thermisch und chemisch stabil sowie dimensionsstabil sind. Der Transponder ist vorzugsweise auf einer innenseitigen Oberfläche der zweiten Glasscheibe befestigt.

Alternativ kann der Transponder und/oder der Reflektor zwischen der ersten und der zweiten Glasscheibe in der Zwischenschicht angeordnet sein.

Bei einer weiteren vorteilhaften Ausgestaltung der erfindungsgemäßen Fahrzeugscheibe befinden sich die Stromsammelleiter auf mindestens einer der Oberflächen, insbesondere einer innenliegenden Oberfläche, der ersten und/oder zweiten Glasscheibe. Alternativ können die Stromsammelleiter in der Zwischenschicht integriert sein. Die Stromsammelleiter sind dann bevorzugt auf eine Trägerfolie aufgebracht. Die Trägerfolie enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die erste und/oder zweite Glasscheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste und/oder die zweite Glasscheibe sind bevorzugt transparent, insbesondere für die Verwendung in einem Fahrzeug, beispielsweise als Windschutzscheibe oder Rückscheibe, oder anderen Verwendungen bei denen eine hohe Lichttransmission erwünscht ist.

Die Zwischenschicht kann durch eine oder auch durch mehrere übereinander oder nebeneinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die Innenscheibe und die Außenscheibe (der ersten und zweiten Glasscheibe) und eventuelle weitere Zwischenschichten miteinander verkleben.

Das Laminieren, also das Verbinden von erster Glasscheibe und zweiter Glasscheibe über die Zwischenschicht, erfolgt bevorzugt unter Einwirkung von Hitze, Vakuum und/oder Druck. Es können Laminationsverfahren zur Herstellung der Verbundscheibe verwendet werden.

Die Dicke der ersten und/oder zweiten Glasscheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas verwendet.

Die erfindungsgemäße Fahrzeugscheibe eignet sich für alle Fahrzeuge, z.B. Kraftfahrzeuge, Züge, Schiffs- oder Luftfahrzeuge, wobei Kraftfahrzeuge besonders bevorzugt sind. Beispiele für geeignete Kraftfahrzeuge sind Busse, Traktoren, Lastkraftwagen und Personenkraftwagen, wobei Personenkraftwagen besonders bevorzugt sind.

In einer bevorzugten Ausführungsform ist die Fahrzeugscheibe eine Windschutzscheibe, Dachscheibe, eine Heckscheibe, eine hintere Seitenscheibe oder eine vordere Seitenscheibe, vorzugsweise in einem Kraftfahrzeug.

Die erfindungsgemäße Kombination der beschriebenen technischen Merkmale führt zu einer Fahrzeugscheibe, bei welcher der Antennengewinn des Transponders optimiert ist.

Ein weiterer Aspekt der Erfindung umfasst ein Verfahren zur Herstellung einer Fahrzeugscheibe, wobei zumindest:
- ein Transponder mit einer Antenne und einer Steuereinheit zur Kommunikation mit einem Lesegerät auf eine Oberfläche einer Glasscheibe befestigt wird, wobei die Steuereinheit einen Speicher zum Speichern von Identifikationsdaten aufweist, und
- ein zum Transponder zugeordneter, beabstandeter Reflektor an einer Oberfläche der Glasscheibe angeordnet wird, wobei der Reflektor zumindest teilweise durch einen der zwei Stromsammelleiter ausgebildet und zum Erhöhen eines Antennengewinns der Antenne vorgesehen ist.

In einer vorteilhaften Ausführungsform des erfindungsgemäßen Verfahrens ist der Transponder auf einem Substrat angeordnet, wobei das Substrat durch Verkleben mit einem Klebstoff mit der Oberfläche der Glasscheibe verbunden wird.

Die Erfindung umfasst außerdem die Verwendung der Fahrzeugscheibe nach einem der Ansprüche 1 bis 12 in Fortbewegungsmitteln für den Verkehr auf dem Lande, in der Luft oder zu Wasser, insbesondere in Kraftfahrzeugen beispielsweise als Windschutzscheibe, Seitenscheibe, Heckscheibe, und/oder Dachscheibe.

Die Erfindung betrifft auch ein Fahrzeug, umfassend mindestens eine erfindungsgemäße Fahrzeugscheibe, wobei das Fahrzeug bevorzugt ein Kraftfahrzeug ist.

Die Erfindung wird nachfolgend anhand von nicht einschränkenden Ausführungsbeispielen unter Bezug auf die beigefügten Zeichnungen weiter erläutert.

Die Erfindung wird im Folgenden und in den beigefügten Figuren erläutert. In diesen zeigt:
- Fig. 1: eine Draufsicht auf eine erfindungsgemäße Fahrzeugscheibe mit einem Transponder;
- Fig. 2: ein alternatives Ausgestaltungsbeispiel einer erfindungsgemäßen Fahrzeugscheibe mit Transponder,
- Fig. 3: ein weiteres alternatives Ausgestaltungsbeispiel einer erfindungsgemäßen Fahrzeugscheibe mit Transponder,
- Fig. 4: ein weiteres alternatives Ausgestaltungsbeispiel einer erfindungsgemäßen Fahrzeugscheibe mit Transponder,
- Fig. 5: ein weiteres alternatives Ausgestaltungsbeispiel einer erfindungsgemäßen Fahrzeugscheibe mit Transponder, und
- Fig. 6: ein weiteres alternatives Ausgestaltungsbeispiel einer erfindungsgemäßen Fahrzeugscheibe mit Transponder.

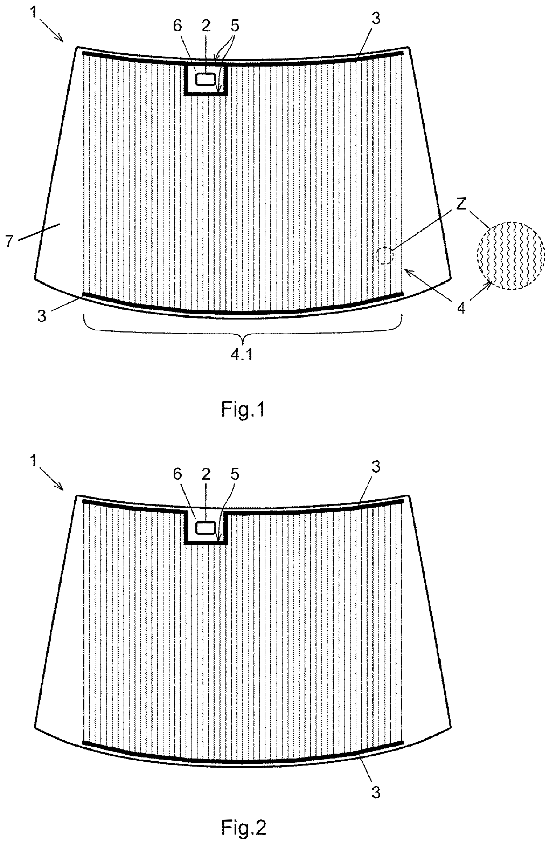

Figur 1 zeigt eine Draufsicht auf eine erfindungsgemäße Fahrzeugscheibe 1. Die Fahrzeugscheibe 1 ist in diesem Beispiel als Windschutzscheibe eines Personenkraftwagens ausgebildet und mit einem Transponder 2 ausgestattet. Weiterhin umfasst die Fahrzeugscheibe 1 eine Glasscheibe 7 und einen zum Transponder zugeordneten und beabstandeten Reflektor 5. Der Reflektor 5 ist zur Erhöhung des Antennengewinns vorgesehen.

Die Abmessungen der Fahrzeugscheibe 1 betragen beispielsweise 0,9 m x 1,5 m. Der Transponder 2 ist im oberen, seitlichen Bereich der Fahrzeugscheibe 1 angeordnet. Alternativ kann der Transponder 2 an anderen Stellen der Fahrzeugscheibe 1 angeordnet sein, beispielsweise im oberen, mittigen Bereich der Fahrzeugscheibe 1. Bei der Festlegung einer Position für den Transponder ist es wichtig eine geeignete Position mit guter Verbindung zum Lesegerät zu finden. Außerdem sind mögliche weitere Fahrzeugteile zu berücksichtigen, die sich in Scheibennähe befinden könnten, wie Spiegel oder Kamera.

Der Transponder 2 ist ein sogenannter UHF-RFID Transponder (Datenträger bei einer Funkfrequenz-Identifizierung) mit einer Antenne und einer Steuereinheit. Die Steuereinheit umfasst einem Speicher zum Speichern von Identifikationsdaten und dient zur Kommunikation mit einem externen Lesegerät. Bei der Antenne kann es sich um eine flächig ausgeführte Antenne handeln, die eine symmetrische, mäanderförmige Struktur aufweist. Die Antenne kann sehr verschiedene andere Formen annehmen.

Zum Auslesen des Transponders 2 wird durch ein externes Lesegerät ein auf den Transponder 2 abgestimmtes elektromagnetisches Wechselfeld erzeugt. Dabei ist das elektromagnetische Wechselfeld mit einem Abfragesignal moduliert. Der Transponder 2 sendet ein individualisierendes Signal, wenn er einem entsprechenden elektromagnetischen Wechselfeld ausgesetzt wird. Derartige Transponder arbeiten im Frequenzbereich von 860 MHz bis 930 MHz, den sogenannten Ultra High Frequenzen (UHF). Entsprechend ist die Größe der Antenne auf diese Frequenzen abgestimmt.

Der Transponder 2 kann als aktiver oder passiver Transponder ausgebildet sein. Der aktive Transponder 2 kann die Energie für das vom Transponder ausgesendete Signal von einer dem Transponder 2 zugeordneten separaten Energiequelle empfangen. Der passive Transponder 2 bezieht die Energie für das Rücksenden individualisierender Signale aus der Energie des durch das Lesegerät erzeugten elektromagnetischen Wechselfeldes. Nachdem der Transponder 2 das Signal gesendet hat, wird das Signal von dem externen und sich in Reichweite des Signals befindlichen Lesegerät empfangen.

Die Fahrzeugscheibe 1 umfasst den Transponder 2 sowie ein Leitersystem 4 mit Heizfunktion. Das Leitersystem 4 verfügt über als elektrische Heizleiter dienende Widerstandselemente. Die Heizleiter bestehen aus vertikal, im wesentlich parallel zueinander verlaufenden Widerstandsdrähten, die einen Durchmesse von etwa 20 µm bis 30 µm aufweisen. Sie sind vorzugsweise in einem gegenseitigen Abstand von etwa 1 mm bis 5 mm wellenförmig verlegt und bilden ein Heizfeld 4.1 aus. Die Wellenform der Widerstandsdrähte wird im Ausschnitt Z des Heizfeldes 4.1 in vergrößerter Darstellung ersichtlich. Die Heizleiter verlaufen im Wesentlichen senkrecht zur Antenne des Transponders. Das Heizfeld 4.1 weist eine im Wesentlichen rechteckige Form auf.

Die Heizleiter verlaufen zwischen zwei stromführenden Stromsammelsammelleitern 3. Ein oberer Stromsammelleiter 3 ist in einem Abstand von ca. 5 cm vom oberen Glasscheibenrand entfernt angeordnet, ein unterer Stromsammelleiter 3 in einem Abstand von etwa 8 cm.

Abschnitte des oberen Stromsammelleiters 3 dienen als Reflektor 5. Sie reflektieren ein vom Transponder empfangenes oder gesendetes Signal. Diese Abschnitte sind im Wesentlichen als ein Rechteck ausgebildet, das den Transponder 2 mittig umschließt. Das Rechteck weist eine Länge von 130 mm und eine Breite von 110 mm auf. Das abschnittsweise durch den oberen Stromsammelleiter 3 gebildete Rechteck ist zur Seite des Beifahrers hin asymmetrisch verschoben.

Durch einen derartigen Reflektor 5 werden einfallende und ausgehende elektromagnetische Strahlungswellen des Transponders 2 über diese Abschnitte der Stromsammelleiter 3 reflektiert. Die Bündelung der Abstrahlung führt zu einer Verstärkung des Antennensignals.

Die Heizleiter und der Transponder 2 sind auf derselben Oberfläche der Glasscheibe 7 angeordnet, wobei sich der Transponder 2 in einem Bereich 6 der Glasscheibe 7 befindet, in dem auf der Glasscheibe 7 keine Heizleiter oder sonstige Metallisierung vorhanden sind. Dieser Bereich 6 ist somit grundsätzlich durchlässig für elektromagnetische Strahlung, insbesondere im Frequenzbereich des Transponders 2. Die Länge und Breite des Bereichs 6 sind auf den Frequenzbereich des Transponders 2, seine spezielle Ausführung und seine Einbausituation im Gesamtfahrzeug abgestimmt.

Alternativ kann die Fahrzeugscheibe 1 als Verbundscheibe ausgebildet sein, bei der das Leitersystem 4 auf bzw. in der Fahrzeugscheibe 1 flächenartig angeordnet ist. Die Verbundscheibe umfasst die erste Glasscheibe 7, die über eine thermoplastische Zwischenschicht mit einer zweiten Glasscheibe verbunden ist. Im Querschnitt weist eine derartige Fahrzeugscheibe 1 die erste, äußere Glasscheibe 7, eine Zwischenschicht und eine zweite, innere Glasscheibe auf. Mit innere Glasscheibe, auch Innenscheibe genannt, wird diejenige Scheibe bezeichnet, welche in Einbaulage eines Fahrzeugs dem Innenraum zugewandt ist. Mit äußere Glasscheibe 7, auch Außenscheibe genannt, wird diejenige Scheibe bezeichnet, welche in Einbaulage der äußeren Umgebung zugewandt ist.

Die Zwischenschicht ist vorzugsweise eine PVB-Folie. Zusätzlich können weitere Zwischenschichten zwischen der ersten äußeren Glasscheibe und der zweiten, inneren Glasscheibe angeordnet sein. Die Zwischenschichten können Polyvinylbutyral, Ethylenvinylacetat, Polyurethan und/oder Gemische und/oder Copolymere davon und eine Polymerfolie aufweisen. Bevorzugt wird eine Schicht Polyvinylbutyral (PVB) mit einer Polyethylenterephthalat-Folie (PET) verwendet. Derartige Zwischenschichten können infrarotreflektierende Eigenschaften aufweisen.

Die zweite, innere Glasscheibe ist beispielsweise dafür vorgesehen, in Einbaulage dem Innenraum eines Fahrzeugs zugewandt zu sein. Das heißt, sie weist eine innenseitige Oberfläche IV auf, die vom Innenraum aus zugänglich ist, wogegen die außenseitige Oberfläche I der ersten, äußeren Glasscheibe bezüglich des Fahrzeuginnenraums nach außen weist. Erste, äußere Glasscheibe und zweite, innere Glasscheibe bestehen beispielsweise aus Natron-Kalkglas. Die Dicke der zweiten, inneren Glasscheibe beträgt beispielsweise 1,6 mm und die Dicke der ersten, äußeren Glasscheibe beträgt 2,1 mm. Es versteht sich, dass die zweite, innere Glasscheibe und die erste, äußere Glasscheibe beispielsweise auch gleich dick ausgebildet sein können. Die Zwischenschicht weist vorzugsweise eine Dicke von 0,76 mm auf.

Der Transponder 2 kann in diesem Ausführungsbeispiel auf der innenseitigen Oberfläche IV der zweiten, inneren Glasscheibe angeordnet sein. Der Transponder 2 befindet sich in einem Bereich der Fahrzeugscheibe 1, in dem auf der innenseitigen Oberfläche II der ersten, äußeren Glasscheibe 7 der Bereich 6 angeordnet ist. Somit liegt der Bereich 6 gegenüber dem Transponder 2. Der Bereich 6 ist durchlässig für elektromagnetische Strahlung im Frequenzbereich des Transponders 2, so dass das durch den Transponder 2 abgegebene Signal vom Fahrzeuginnenraum in Richtung Fahrzeugaußenraum die zweite, innere Glasscheibe und die erste, äußere Glasscheibe im Bereich 6 durchdringt.

Alternativ kann der Transponder 2 auch in der Zwischenschicht der Fahrzeugscheibe 1 angeordnet sein.

In Figur 2 ist ein alternatives Ausgestaltungsbeispiel einer erfindungsgemäßen Fahrzeugscheibe 1 aus Figur 1 dargestellt. Im Unterschied zur Figur 1 ist der dem Transponder 2 zugeordnete Reflektor 5 als ein unvollständiges Rechteck ausgebildet, dessen eine Längsseite fehlt.

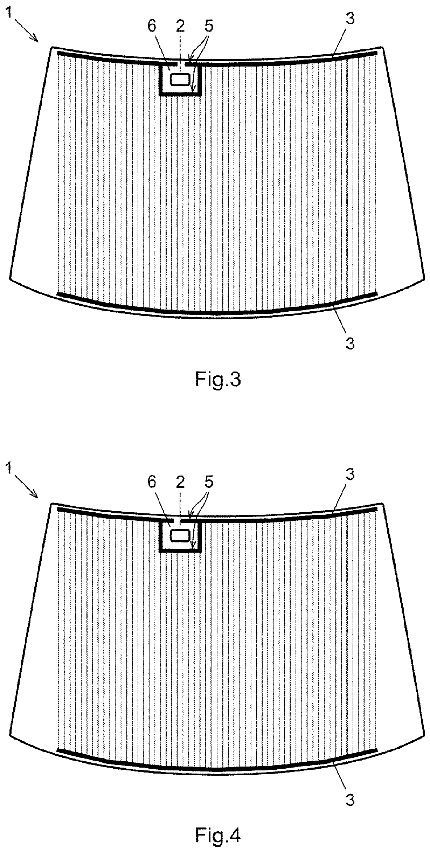

In Figur 3 und Figur 4 ist jeweils ein weiteres alternatives Ausgestaltungsbeispiel der erfindungsgemäßen Fahrzeugscheibe 1 aus Figur 1 dargestellt. Im Unterschied zur Figur 1 ist der dem Transponder 2 zugeordnete Reflektor 5 als ein unvollständiges Rechteck ausgebildet, dessen eine Längsseite eine Unterbrechung aufweist.

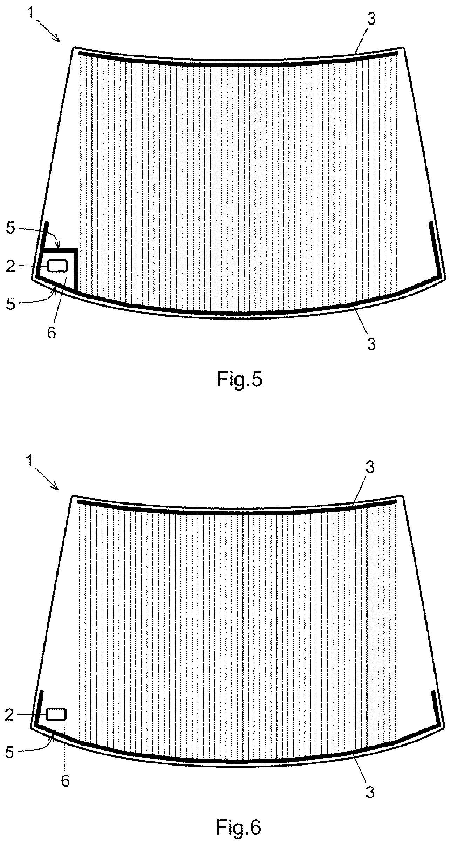

In Figur 5 und Figur 6 ist jeweils ein weiteres alternatives Ausgestaltungsbeispiel der erfindungsgemäßen Fahrzeugscheibe 1 aus Figur 1 dargestellt. Im Unterschied zur Figur 1 ist der untere Stromsammelleiter 3 über den Bereich der Widerstandsdrähte hinaus an beiden Enden verlängert. Der Transponder 2 ist jeweils in einem Bereich 6 außerhalb des Heizfeldes 4.1 angeordnet. Dabei weisen die Verlängerungen des unteren Stromsammelleiters 3 jeweils einen Knick auf. Durch den Knick sind die Verlängerungen in einer Richtung, vorzugsweise in vertikaler Richtung abgewinkelt. Dadurch verlaufen die Enden der Verlängerungen im Wesentlichen parallel zu den Seitenkanten der Fahrzeugscheibe 1.

Der Transponder 2 ist in Figur 5 von der Verlängerung vollständig umrandet.

In Figur 6 ist der Transponder von der Verlängerung nur teilweise, durch zwei seitliche Abschnitte (einer horizontal, einer vertikal) des unteren Stromsammelleiters 3, umrandet. Der Reflektor 5 besteht im Wesentlichen aus dem horizontalen seitlichen Abschnitt des unteren Stromsammelleiters 3, der in ähnlichem Abstand zur Transponder 2 angeordnet ist wie der untere Reflektor in Fig. 1 bis Fig. 4.

Alternativ kann der Transponder 2 und/oder das Leitersystem 4 mit den zwei Stromsammelleitern 3 auf der innenseitigen Oberfläche IV der zweiten, inneren Glasscheibe angeordnet sein. Die Stromsammelleiter 3 bestehen dann aus einer silberhaltigen Siebdruckpaste, die durch Einbrennen oder Druck auf die Fahrzeugscheibe aufgebracht wird. Die Schichtdicke der eingebrannten Silberpaste beträgt bevorzugt von 5 µm bis 20 µm.

Die Erfindung stellt eine Fahrzeugscheibe 1 zur Verfügung, bei der das Signal des Transponders 2 hauptsächlich in einer senkrechten Richtung zur Oberfläche der Fahrzeugscheibe und in einem vertikalen Winkelbereich von ca. ± 45° zur Hauptverstärkungsrichtung verstärkt wird. In einer vorteilhaften Ausgestaltung der Erfindung wird durch eine zumindest abschnittsweise Ausgestaltung der Stromsammelleiter 3 als Reflektor 5 ein erhöhter Antennengewinn des Transponders 2 erzielt. Dies war für den Fachmann unerwartet und überraschend.

### Bezugszeichenliste:

- 1: Fahrzeugscheibe
- 2: Transponder
- 3: Stromsammelleiter
- 4: Leitersystem
- 4.1: Heizfeld
- 5: Reflektor
- 6: für elektromagnetische Strahlung im Frequenzbereich der Antenne durchlässiger Bereich
- 7: Glasscheibe

## Patentansprüche

1. Fahrzeugscheibe (1), umfassend
a) eine Glasscheibe (7),
b) eine elektrisch leitfähige Funktionskomponente (4),
c) mindestens zwei Stromsammelleiter (3), wobei die elektrisch leitfähige Funktionskomponente (4) mit den Stromsammelleitern (3) derart elektrisch leitend verbunden ist, dass bei Anlegen einer elektrischen Spannung an die Stromsammelleiter (3) ein Strom durch die elektrisch leitfähige Funktionskomponente (4) fließen kann,
**gekennzeichnet durch**
einen Transponder (2) mit einer Antenne und einer Steuereinheit zur Kommunikation mit einem Lesegerät, wobei die Steuereinheit einen Speicher zum Speichern von Identifikationsdaten umfasst, und
einen zum Transponder (2) zugeordneten, beabstandeten Reflektor (5) zum Erhöhen eines Antennengewinns der Antenne, wobei der Reflektor (5) zumindest teilweise durch einen der zwei Stromsammelleiter (3) ausgebildet ist.

2. Fahrzeugscheibe (1) nach Anspruch 1, wobei der Reflektor (5) zumindest zwei parallel verlaufende Abschnitte eines Stromsammelleiters (3) umfasst, und wobei die Abschnitte des Stromsammelleiters (3) derart angeordnet sind, dass die Abschnitte zur Reflexion eines zu übertragenen Signals der Antenne vorgesehen sind.

3. Fahrzeugscheibe (1) nach Anspruch 2, wobei der Transponder (2) oder eine Fläche der orthogonalen Projektion des Transponders (2) mittig zwischen zwei parallel verlaufenden Abschnitten eines Stromsammelleiters (3) angeordnet ist.

4. Fahrzeugscheibe (1) nach Anspruch 1 oder 2, wobei der Reflektor (5) als ein Viereck, Rechteck oder ein Trapez ausgebildet ist.

5. Fahrzeugscheibe (1) nach einem der Ansprüche 1 bis 4, wobei der Transponder (2) oder eine Fläche der orthogonalen Projektion des Transponders (2) in einem für elektromagnetische Strahlung im Frequenzbereich der Antenne durchlässigen Bereich (6) der Fahrzeugscheibe (1) angeordnet ist.

6. Fahrzeugscheibe (1) nach einem der Ansprüche 1 bis 5, wobei der Reflektor (5) einen für elektromagnetische Strahlung im Frequenzbereich der Antenne durchlässigen Bereich (6) der Fahrzeugscheibe (1) umrandet.

7. Fahrzeugscheibe (1) nach einem der Ansprüche 1 bis 6, wobei die elektrisch leitfähige Funktionskomponente als ein Leitersystem (4) mit Heizfunktion ausgebildet ist.

8. Fahrzeugscheibe (1) nach Anspruch 7, wobei das Leitersystem (4) mehrere Widerstandsdrähte als Heizleiter aufweist, die im Wesentlichen senkrecht zur Antenne des Transponders (2) verlaufen.

9. Fahrzeugscheibe (1) nach einem der Ansprüche 1 bis 8, wobei ein erster Stromsammelleiter (3) in der Nähe einer ersten Scheibenkante und ein zweiter Stromsammelleiter (3) in der Nähe einer der ersten Scheibenkante gegenüberliegenden, zweiten Scheibenkante verlaufen.

10. Fahrzeugscheibe (1) nach einem der Ansprüche 1 bis 9, wobei zumindest einer der zwei Stromsammelleiter (3) eine Verlängerung mit einem Knick aufweist.

11. Fahrzeugscheibe (1) nach einem der Ansprüche 1 bis 10, wobei die erste Glasscheibe (7) über eine thermoplastische Zwischenschicht (8) mit einer zweiten Glasscheibe (9) verbunden ist.

12. Fahrzeugscheibe (1) nach einem der vorherigen Ansprüche, wobei die Fahrzeugscheibe eine Kraftfahrzeugscheibe ist.

13. Fahrzeug, umfassend eine Fahrzeugscheibe (1) nach einem der Ansprüche 1 bis 12, wobei das Fahrzeug ein Kraftfahrzeug ist.

14. Verfahren zur Herstellung einer Fahrzeugscheibe (1) nach einem der Ansprüche 1 bis 12, wobei zumindest:
a) der Transponder (2) mit einer Antenne und einer Steuereinheit zur Kommunikation mit einem Lesegerät an eine Oberfläche der Glasscheibe (7) befestigt wird, wobei die Steuereinheit einen Speicher zum Speichern von Identifikationsdaten aufweist, und
b) der zum Transponder (2) zugeordnete, beabstandete Reflektor (5) an einer Oberfläche der Glasscheibe (7) angeordnet wird, wobei der Reflektor (5) zumindest teilweise durch einen der zwei Stromsammelleiter (3) ausgebildet und zum Erhöhen eines Antennengewinns der Antenne vorgesehen ist.

15. Verwendung der Fahrzeugscheibe nach einem der Ansprüche 1 bis 12 in Fortbewegungsmitteln für den Verkehr auf dem Lande, in der Luft oder zu Wasser, insbesondere in Kraftfahrzeugen, beispielsweise als Windschutzscheibe, Heckscheibe, und/oder Dachscheibe.

## Claims

1. Vehicle window (1), comprising
a) a glass pane (7),
b) an electrically conductive functional component (4),
c) at least two busbars (3), wherein the electrically conductive functional component (4) is electrically conductively connected to the busbars (3) such that when an electrical voltage is applied to the busbars (3), a current can flow through the electrically conductive functional component (4),
**characterized by**
a transponder (2) having an antenna and a control unit for communicating with a reader, wherein the control unit includes a memory for storing identification data, and
a reflector (5), associated with and spaced apart from the transponder (2), for increasing an antenna gain of the antenna, wherein the reflector (5) is formed at least partially by one of the two busbars (3).

2. Vehicle window (1) according to claim 1, wherein the reflector (5) includes at least two parallel sections of a busbar (3), and wherein the sections of the busbar (3) are arranged such that the sections are provided for reflection of a signal of the antenna to be transmitted.

3. Vehicle window (1) according to claim 2, wherein the transponder (2) or a surface of the orthogonal projection of the transponder (2) is arranged centrally between two parallel sections of a busbar (3).

4. Vehicle window (1) according to claim 1 or 2, wherein the reflector (5) is implemented as a square, a rectangle, or a trapezoid.

5. Vehicle window (1) according to one of claims 1 through 4, wherein the transponder (2) or a surface of the orthogonal projection of the transponder (2) is arranged in a region (6) of the vehicle window (1) that is transparent to electromagnetic radiation in the frequency range of the antenna.

6. Vehicle window (1) according to one of claims 1 through 5, wherein the reflector (5) borders a region (6) of the vehicle window (1) that is transparent to electromagnetic radiation in the frequency range of the antenna.

7. Vehicle window (1) according to one of claims 1 through 6, wherein the electrically conductive functional component is implemented as a conductor system (4) with a heating function.

8. Vehicle window (1) according to claim 7, wherein the conductor system (4) has a plurality of resistance wires as heating conductors, which run substantially perpendicular to the antenna of the transponder (2).

9. Vehicle window (1) according to one of claims 1 through 8, wherein a first busbar (3) runs in the vicinity of a first pane edge and a second busbar (3) runs in the vicinity of a second pane edge opposite the first pane edge.

10. Vehicle window (1) according to one of claims 1 through 9, wherein at least one of the two busbars (3) has an extension with a bend.

11. Vehicle window (1) according to one of claims 1 through 10, wherein the first glass pane (7) is joined to a second glass pane (9) via a thermoplastic intermediate layer (8).

12. Vehicle window (1) according to one of the preceding claims, wherein the vehicle window is a motor vehicle window.

13. Vehicle, including a vehicle window (1) according to one of claims 1 through 12, wherein the vehicle is a motor vehicle.

14. Method for producing a vehicle window (1) according to one of claims 1 through 12, wherein at least:
a) the transponder (2) having an antenna and a control unit for communicating with a reader is fastened on a surface of the glass pane (7), wherein the control unit has a memory for storing identification data, and
b) the reflector (5) associated with and spaced apart from the transponder (2) is arranged on a surface of the glass pane (7), wherein the reflector (5) is formed at least partially by one of the two busbars (3) and is provided for increasing an antenna gain of the antenna.

15. Use of the vehicle window according to one of claims 1 through 12 in means of transportation for travel on land, in the air, or on water, in particular in motor vehicles, for example, as a windshield, rear window, and/or roof panel.

## Revendications

1. Vitre de véhicule (1), comportant
a) une vitre en verre (7) ;
b) un composant fonctionnel électriquement conducteur (4) ;
c) au moins deux barres omnibus (3), le composant fonctionnel électriquement conducteur (4) étant relié aux barres omnibus (3) de façon électriquement conductrice de telle sorte que, lors de l'application d'une tension électrique auxdites barres omnibus (3), un courant peut passer à travers le composant fonctionnel électriquement conducteur (4),
**caractérisé par**
un transpondeur (2) ayant une antenne et une unité de commande en vue de la communication avec un appareil de lecture, l'unité de commande comportant une mémoire pour stocker des données d'identification, et
un réflecteur (5) associé au transpondeur (2) et espacé de celui-ci, lequel réflecteur (5) est destiné à augmenter un gain d'antenne de l'antenne et est formé au moins partiellement par l'une des deux barres omnibus (3).

2. Vitre de véhicule (1) selon la revendication 1, dans laquelle le réflecteur (5) comporte au moins deux sections s'étendant parallèlement d'une barre omnibus (3), et dans laquelle les sections de la barre omnibus (3) sont agencées de telle sorte que les sections sont prévues pour réfléchir un signal de l'antenne à transmettre.

3. Vitre de véhicule (1) selon la revendication 2, dans laquelle le transpondeur (2) ou une surface de la projection orthogonale du transpondeur (2) est disposé(e) de façon centrale entre deux sections s'étendant parallèlement d'une barre omnibus (3).

4. - Vitre de véhicule (1) selon l'une des revendications 1 ou 2, dans laquelle le réflecteur (5) est réalisé sous la forme d'un carré, d'un rectangle ou d'un trapèze.

5. - Vitre de véhicule (1) selon l'une des revendications 1 à 4, dans laquelle le transpondeur (2) ou une surface de la projection orthogonale du transpondeur (2) est disposé (e) dans une région (6) de la vitre de véhicule (1) qui est transparente au rayonnement électromagnétique dans la plage de fréquence de l'antenne.

6. - Vitre de véhicule (1) selon l'une des revendications 1 à 5, dans laquelle le réflecteur (5) borde une région (6) de la vitre de véhicule (1) qui est transparente au rayonnement électromagnétique dans la plage de fréquence de l'antenne.

7. - Vitre de véhicule (1) selon l'une des revendications 1 à 6, dans laquelle le composant fonctionnel électriquement conducteur est conçu comme un système conducteur (4) avec une fonction de chauffage.

8. - Vitre de véhicule (1) selon la revendication 7, dans laquelle le système conducteur (4) présente une pluralité de fils de résistance en tant que conducteurs chauffants, qui s'étendent sensiblement perpendiculairement à l'antenne du transpondeur (2).

9. - Vitre de véhicule (1) selon l'une des revendications 1 à 8, dans laquelle une première barre omnibus (3) s'étend à proximité d'un premier bord de vitre et une seconde barre omnibus (3) s'étend à proximité d'un second bord de vitre opposé au premier bord de vitre.

10. - Vitre de véhicule (1) selon l'une des revendications 1 à 9, dans laquelle au moins l'une des deux barres omnibus (3) présente un prolongement avec un coude.

11. - Vitre de véhicule (1) selon l'une des revendications 1 à 10, dans laquelle la première vitre en verre (7) est réunie à une seconde vitre en verre (9) par une couche intermédiaire thermoplastique (8).

12. - Vitre de véhicule (1) selon l'une des revendications précédentes, dans laquelle la vitre de véhicule est une vitre de véhicule automobile.

13. - Véhicule comportant une vitre de véhicule (1) selon l'une des revendications 1 à 12, dans lequel le véhicule est un véhicule automobile.

14. - Procédé de fabrication d'une vitre de véhicule (1) selon l'une des revendications 1 à 12, dans lequel au moins :
a) le transpondeur (2) ayant une antenne et une unité de commande en vue de la communication avec un appareil de lecture est fixé sur une surface de la vitre en verre (7), l'unité de commande présentant une mémoire pour stocker des données d'identification ; et
b) le réflecteur (5) associé au transpondeur (2) et espacé de celui-ci est disposé sur une surface de la vitre en verre (7), le réflecteur (5) étant formé au moins partiellement par l'une des deux barres omnibus (3) et étant prévue pour augmenter un gain d'antenne de l'antenne.

15. - Utilisation de la vitre de véhicule selon l'une des revendications 1 à 12 dans des moyens de locomotion pour le transport sur terre, dans l'air ou sur l'eau, en particulier dans des véhicules automobiles, par exemple comme pare-brise, lunette arrière et/ou vitre de toit.
